(19) **Europäisches Patentamt**
**European Patent Office**
**Office européen des brevets**

(11) **EP 1 981 931 B1**

(12) **EUROPEAN PATENT SPECIFICATION**

(45) Date of publication and mention
of the grant of the patent:
**25.11.2009 Bulletin 2009/48**

(51) Int Cl.:
**C08G 69/46** (2006.01)     **C08G 69/14** (2006.01)
**C08G 69/16** (2006.01)

(21) Application number: **07703300.9**

(22) Date of filing: **06.02.2007**

(86) International application number:
**PCT/EP2007/000992**

(87) International publication number:
**WO 2007/090602 (16.08.2007 Gazette 2007/33)**

(54) **PROCESS FOR INCREASING THE MOLECULAR WEIGHT OF A POLYAMIDE**

VERFAHREN ZUR ERHÖHUNG DES MOLEKULARGEWICHTS EINES POLYAMIDS

PROCEDE D'AUGMENTATION DE LA MASSE MOLECULAIRE D'UN POLYAMIDE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **08.02.2006 EP 06075258**

(43) Date of publication of application:
**22.10.2008 Bulletin 2008/43**

(73) Proprietor: **DSM IP Assets B.V.
6411 TE Heerlen (NL)**

(72) Inventors:
• **BRONSAER, Cornelia, Emilia, Maria
NL-6171 HM Stein (NL)**
• **MAASSEN, Mathijs, Hubert, Gertrudes
NL-6171 XT Stein (NL)**
• **VAN GEENEN, Albert, Arnold
NL-6133 VL Sittard (NL)**
• **KIERKELS, Renier, Henricus, Maria
NL-6099 AT Beegden (NL)**

(74) Representative: **Verhaegen, Ilse Maria M. et al
DSM Intellectual Property
Office Geleen
P.O. Box 9
6160 MA  Geleen (NL)**

(56) References cited:
**US-A- 3 386 967    US-A- 4 816 557
US-A- 5 597 888**

**Description**

The invention relates to a process for increasing the molecular weight of a polyamide. Such a process is known from US 4,816,557.

A disadvantage of this known process is the long residence times needed to obtain the desired molecular weight. Residence times of 20 - 60 hours are mentioned and the preferred range in this publication is from 25 - 50 hours.

Aim of the present invention is to provide a process that requires shorter times than the known process to increase the molecular weight to a desired level.

This aim is achieved according to the invention in that the polyamide is contacted in countercurrent with a first stream comprising 15 to 100 wt.% $H_2O$ and 85 to 0 wt.% $N_2$ at a temperature between 90 and 180 °C and for a time between 5 and 10 hours and a second step, wherein the polyamide obtained in the first step is contacted in countercurrent with a second stream comprising 90 to 100 wt% N2 and 10 to 0 wt% $H_2O$ at a temperature between 130 and 200 °C and for a time between 10 and 30 hours.

Preferably the first stream comprises between 50 and 100 wt% $H_2O$ and between 50 and 0 wt% $N_2$, more preferably between 85 and 100 wt% $H_2O$ and between 15 and 0 wt% $N_2$ since higher water concentrations appear to lead to a faster overall process. The temperature in the first step may be at least 100 or 110 °C and at most 170 or 160 °C. The temperature in the first step is preferably between 100 and 130 °C.

Preferably the second stream comprises between 6 and 0 wt% $H_2O$ and between 94 and 100 wt% $N_2$. Higher temperatures in the second step promote the increase of the higher molecular weight but an unwanted side effect with some polyamides may be an increase in the back-forming of extractables, in particular monomers. The temperature in the second step may be at least 140 or 150 °C and at most 190 or 185 °C. The temperature in the second step is preferably between 140 and 180 °C.

In the two-step process of the invention polyamide having high molecular weights can be obtained in considerably shorter times than with the known process.

A further advantage, in particular for polyamide-6 and other polyamides, that initially contain unwanted amounts of extractables, i.e. of monomers and extractable oligomers, resides in that the amount of extractables is lowered to an acceptable level.

In the common processes for obtaining polyamide the corresponding monomers are reacted in a water-containing environment. Due to equilibrium restrictions governing the process the polymer typically may contain 7-15 wt% mono- and oligomers and the molecular weight cannot be deliberately high. Most of the know processes therefore comprise further steps in which the low molecular weight component content, i.e. the monomer and oligomer content, is reduced to an acceptable level and the molecular weight is increased.

Removal of the low molecular weight components usually is achieved by an extraction step in which the polymer is washed with an aqueous stream. From the resulting extraction stream the monomers and oligomers are separated for recycling into the polymerization process and the purified aqueous stream is recycled into the extraction stream. This step is time consuming and further requires a large amount of recycling capacity and there have been many attempts to avoid this step. The amount of mono- and oligomers after extraction usually is in the range of 0.1 to 2 wt%. The process of the invention makes such separate extraction step superfluous although it also can be applied with good results to extracted polyamide.

The step of increasing the molecular weight usually is applied to pelletized and extracted polymer by subjecting it for a certain time to an elevated temperature below the melting point of the polymer. This process step is known as solid-state post condensation and also requires a considerable time, depending on the desired molecular weight. Processes for pelletizing polyamide are commonly known per se in the art.

The molecular weight (Mn) obtainable in the polymerization step usually lies within the range of 13,800 to 20,500 g/mole but can be as high as 23,000 g/mole, which may be sufficient for processing the polymer in certain applications such as injection molding and spinning textile and carpet fiber. The molecular weight of the polymers can be calculated using the following formula:

$$Mn = \frac{2 \; equivalents / mole}{(sum \; of \; final \; groups) \; equivalents / g}$$

Final groups are all groups attached to the ends of the non-cyclic polyamide molecules and may be $NH_2$, COOH, R-CO- or RNH-, where R = alkyl, cycloalkyl, aryl, aralkyl and may carry groups not reactive for the polyamide reaction, of which hindered amine groups (HALS) and hindered phenol groups are examples.

Processes for making polyamide films and extruded objects, however, require higher molecular weights, ranging from 23,000 or 28,000 to 35,000 or 38,000 g/mole or even higher. For film applications also a low monomer- and oligomer content is required. Obtaining polyamides satisfying these criteria with the known process is hardly possible and extremely time consuming. It has been found now that with the process according to the invention it is possible to obtain polyamide having a molecular weight of more than 23,000 g/mole or more than 28,000 g/mole and even more than 35,000 or 38,000 g/mole. These values can be achieved starting from polyamide-as-polymerized having a molecular weight of from 18,000 g/mole or even from 15,000 g/mole and even from 12,500 g/mole. The process will also be effective when starting from polymer having lower values but it is difficult to bring such polymer into a suitable shape e.g. to pelletize it.

Surprisingly it was found that the process of the invention also reduces the loss of COOH groups normally observed for polyamides subjected to state of the art solid state post condensations. The invention therefore also relates to a polyamide having a molecular weight of at least 23,000 g/mole, in which the concentrations of substituted or unsubstituted amine end groups minus the concentrations of substituted or unsubstituted carboxylic acid end groups is <3 meq/kg polymer or even less than 2 or 1.5 meq/kg.

It was found that this polyamide is very suitable to be further processed into semi finished articles like rods, from which e.g. gears can be machined. For these applications an even higher molecular weight is required than for film applications. It has appeared that the unique end group ratio leads to faster increase in the molecular weight during later melt processing or during further post condensation steps than for polyamides not having said ratio. Preferably the polyamide is polyamide-6.

It was further surprisingly found that with the process of the invention the amount of extractables, i.e. of monomers and extractable oligomers, initially present in the polyamide can be lowered. With the process of the invention polyamides, initially containing unwanted amounts of extractables, containing an acceptable level of extractables can be obtained. As used herein, the acceptable level of extractables is understood to be less than 0.5 wt.% of residual monomer(s). In the case of polyamide-6, the acceptable level is understood to be less than 0.5 wt% of caprolactam. This low content can be achieved even when the polyamide that is fed to the first zone contains from 2-12 wt% of e.g. caprolactam. The invention therefore also relates to a polyamide having a molecular weight of at least 23,000 g/mole, in which polyamide the concentrations of substituted or unsubstituted amine end groups minus the concentrations of substituted or unsubstituted carboxylic acid end groups is <3 meq/kg polymer or even less than 2 or 1.5 meq/kg, and which polyamide contains less than 0.5 wt.% of residual monomer(s). Preferably the polyamide is polyamide-6, whereby the polyamide-6 preferably contains less than 0.5 wt.% of caprolactam.

The process of the invention can be used for all kinds of (semi)-crystalline polyamides and copolyamides. Non-limiting examples of (semi)-crystalline (co)-polyamides are: polyamide-6; polyamide-6.6; polyamide-4.6; polyamide-11; polyamide-12; polyamide-12.12; polyamide-6.T; polyamide-6.1; polyamide-6.9; polyamide-6.10; polyamide-MXD.6; polyamide-6/6.6; polyamide-6/6.T; polyamide-6/12. The process according to the invention is extraordinary advantageous for producing polyamide-6 suitable for film applications, where both a high molecular weight and a low extractable content are required.

The polyamide can have been subjected to an extraction step but it is a great advantage of the present invention that it can also be applied successfully to polymer that has not been extracted, thus avoiding a separate aqueous extraction step.

Preferably the polymer has been pelletized in a usual manner before it is fed to the process of the invention. In pelletized form the polyamide is more easily transported through the first and second zone and also an optimal contact with the countercurrent streams is achieved.

The process can be conducted as a batch process or as a continuous process.

In a continuous process the two steps can be conducted in two separate vessels each having the desired countercurrent regime but also in two consecutive zones, each having the desired countercurrent regime, in one vessel.

In an embodiment of a continuous process according to the invention the polyamide polymer that is started from is fed to a first zone. This first zone suitably is a preferably vertically positioned vessel to which the polyamide is fed at an inlet, in this situation the top, and after the specified treatment is let out at an outlet positioned opposite to the inlet, in this situation the bottom. Transport then can occur by gravity. The vessel can be positioned horizontally or otherwise with an angle to the vertical but in those cases additional means for transporting the polyamide through the zone will be required. At or near the outlet of the first zone a stream having a water and N2 content within the specified ranges at a temperature within the specified ranges is fed and forced, e.g. by pressure difference or other known means to induce a gas flow, to the inlet. Thus the stream moves in countercurrent with the polyamide that is moving from the inlet to the outlet.

The polyamide leaving the first zone is fed into a second zone, being a second compartment in the same vessel as the first zone. In an analogous way as described for the first zone the second stream having a water and N2 content within the specified ranges at a temperature within the specified ranges is fed at or near the outlet in countercurrent into the second zone. Higher temperatures promote the increase of the higher molecular weight but an unwanted side effect with some polyamides may be an increase in the back-forming of extractables, in particular monomers.

The outlet for the second stream may be located at or near the polyamide inlet of the second zone thus largely avoiding the second stream to flow through the first zone.

Since the second stream typically has a lower flow rate than the first stream, the stream leaving the second zone, however, can also be used as part of the first stream, by supplying at the outlet of the first zone an additional stream having a flow rate, composition, temperature and increased pressure, if desired, such that on mixing with the outlet stream of the second zone a first stream having the desired properties is obtained. It can easily be calculated, whether such a mixing embodiment is technically feasible, and if so, how to design said additional stream.

The first and second stream, after leaving the vessel can be recycled by separating the extracted extractables and bringing them into the desired countercurrent conditions again.

Preferably the second stream comprises between 5 and 0 wt% $H_2O$ and between 95 and 100 wt% $N_2$.

The process can feasibly be conducted at atmospheric pressure but in the first step also pressures above atmospheric level, e.g. to between 5 - 10 bar can be advantageously used to accelerate this first step. This higher pressure thus appears to reduce the overall process time to achieve a certain molecular weight but requires more expensive pressure-proof technical equipment. The residence time of the polyamide in the first and second zone in a continuous process can be controlled by the fraction of the polyamide that is let out of the corresponding zone. In a continuous process the volumes and outlet flow rates of the respective zones will have to be matched in order to guarantee a continuous unobstructed flow of the polyamide through both zones. Achieving this is a matter of ordinary calculation and technology within the reach of a skilled person.

In a batch process the two steps can be carried out in two separate vessels, each having the desired countercurrent regime, but also the two desired countercurrent regimes can be applied consecutively in one vessel.

In an embodiment of a batch process the polymer is fed to the first zone and the required temperature and pressure are maintained there for the desired time while a countercurrent stream having the desired composition is maintained. The resulting polyamide then is let out the first zone and is fed to the second zone in which the required temperature and pressure for this second step and the proper countercurrent stream then are maintained there for the desired time.

The same composition, temperature, pressure and time specifications apply to the batch process embodiment and to the continuous process embodiments.

In both types of embodiments, the mass flow of the first gas stream with respect to the (mass flow) of polyamide present in the first zone usually lies between 1 and 10 kg/kg, preferably 2-6 kg/kg. The combination of mass flow and its temperature are chosen such that the polyamide in the zone is brought to the required temperature and the remaining moisture level required. Usually a higher mass flow and a correspondingly lower temperature are preferred. An upper level for the mass flow of the gas is defined by the requirement that fluidization of the polyamide stream must be avoided.

The mass flow of the second stream with respect to the mass flow of the polyamide in the second zone usually lies between 1-10 kg/kg, preferably between 1 and 3. Similar considerations regarding temperature level an remaining moisture content as discussed for the first gas stream apply here.

In a batch process the above specified mass flows can be applied as the amount per hour, e.g. for the first stream preferably 2-6 kg/kg.hr.

The invention will be elucidated by the following examples without being restricted thereto.

Example I

A glass tube, length 40 cm, diameter 6 cm and insulated against heat loss, was filled with 1000 g un-extracted polyamide-6 granules, obtained from hydrolytic polymerisation of caprolactam. The polyamide contained 8.5 wt% residual caprolactam and 0.62 wt% of cyclic dimer; the molecular weight, calculated from the concentrations of final groups of an extracted sample of the polymer, was 21,000 g/mole.

In order to remove air, the tube was flushed from the bottom with dry nitrogen for 20 minutes at room temperature.

Next, the polyamide in the tube was treated for 10 hrs with superheated steam of 120°C at a rate of 4 kg/hr. After treatment, the polyamide contained 3.0 wt% caprolactam and 0.66 wt% cyclic dimer. The molecular weight was 20,000 g/mole.

In a next step, the polyamide was treated at a rate of 4 kg/hr with a gaseous mixture of 94.3 wt% nitrogen and 5.7 wt% water, having a temperature of 180°C. After 20 hrs treatment the molecular weight of the polyamide was 32,000 g/mole and the polymer contained 0.25 wt% caprolactam and 0.3 wt% cyclic dimer. After 30 hrs treatment the molecular weight of the polymer was 35,300 g/mole and contained 0.19 wt% caprolactam and 0.2 wt% cyclic dimer. The concentration of COOH groups was 27.8 mili-equivalents/gram (meq/kg) and the concentration of primary amine groups was 28.8 meq/kg

Example II

The apparatus as described in example 1 was filled with 1000 g un-extracted polyamide-6 granules. The polyamide contained 8.5 wt% caprolactam and 0.62 wt% of cyclic dimer; the molecular weight of an extracted sample of the polymer was 21,000 g/mole. After removing air by flushing with nitrogen at room temperature, the granules were treated with superheated steam of 180°C at a rate of 4 kg/hr. After 6 hrs treatment the polyamide contained 1.4 wt% caprolactam and 0.55 wt% cyclic dimer. The molecular weight was 23,700 g/mole.

In a next step the superheated steam was replaced by dry nitrogen of 180°C, rate: 4 kg/hr. After a residence time of 15 hrs, the molecular weight of the polyamide was 35,700 g/mole and after an additional 15 hrs, the molecular weight was 40,500 g/mole and the concentrations of COOH and primary amine groups of the polymer were respectively 24.1 meq/kg and 25.3 meq/kg.

Comparative example A

Using the same apparatus and polyamide as described in example 1, the polymer was first treated during 10 hrs with dry nitrogen of 120°C at a rate of 4 kg/hr. Next, the granules were treated with dry nitrogen of 180°C. After a residence time of 20 hrs, the molecular weight of the polymer was 30,000 g/mole and after an additional residence time of 10 hrs, the molecular weight was 32,600 g/mole and the concentrations of COOH and primary amine groups of the polymer were respectively 27.4 meq/kg and 34.0 meq/kg. This example shows that omitting treatment of the un-extracted polyamide in a first step of the process according to the invention, as described in examples 1 and 2, results in increased residence times for obtaining high molecular weights.

Comparative example 2

Using the apparatus and the same polyamide as described in example 1, the polymer was treated with superheated steam of 180°C at a rate of 4 kg/hr. After a residence time of 15 hrs, the molecular weight of the polyamide was 25,700 g/mole and contained 0.41 wt% caprolactam and 0.38 wt% cyclic dimer. After a residence time of 30 hrs the molecular weight was 30,000 g/mole and the polymer contained 0.22 wt% caprolactam and 0.2 wt% cyclic dimer. Even after 47 hrs at 180°C, the molecular weight was not higher than 31,900 g/mole, showing the favourable effect of treating the polymer in a second step with nitrogen containing 0 to 10 wt% water, as described in Examples 1 and 2, in combination with a first step according to the invention.

**Claims**

1. Process for increasing the molecular weight of a polyamide comprising a first step, wherein the polyamide is contacted in countercurrent with a first stream comprising 15 to 100 wt.% $H_2O$ and 85 to 0 wt.% $N_2$ at a temperature between 90 and 180 °C and for a time between 5 and 10 hours and a second step, wherein the polyamide obtained in the first step is contacted in countercurrent with a second stream comprising 90 to 100 wt% $N_2$ and 10 to 0 wt% $H_2O$ at a temperature between 130 and 200 °C and for a time between 10 and 30 hours.

2. Process according to claim 1, wherein the temperature in the first step is between 100 and 130 °C.

3. Process according to claim 1 or 2, wherein the temperature in the second step is between 140 and 180 °C.

4. Process according to any of claims 1-3, wherein both steps are conducted in a one vessel.

5. Process according to any of claim 1-4, wherein the process is a continuous process and the mass flow of the first stream with respect to the polyamide flow in the first step is between 2 and 6 kg/kg.

6. Process according to any of claim 1-4, wherein the process is a batch process and the mass flow of the first stream with respect to the polyamide flow in the first step is between 2 and 6 kg/kg.hr.

7. Process according to any of claim 1-6, wherein the polyamide is polyamide-6.

**Patentansprüche**

1. Verfahren zur Erhöhung des Molekulargewichts eines Polyamids mit einem ersten Schritt, bei dem man das Polyamid bei einer Temperatur zwischen 90 und 180°C und über einen Zeitraum zwischen 5 und 10 Stunden im Gegenstrom mit einem ersten Strom, der 15 bis 100 Gew.-% $H_2O$ und 85 bis 0 Gew.-% $N_2$ umfaßt, in Berührung bringt, und einem zweiten Schritt, bei dem man das im ersten Schritt erhaltene Polyamid bei einer Temperatur zwischen 130 und 200°C und über einen Zeitraum zwischen 10 und 30 Stunden im Gegenstrom mit einem zweiten Strom, der 90 bis 100 Gew.-% $N_2$ und 10 bis 0 Gew.-% $H_2O$ umfaßt, in Berührung bringt.

2. Verfahren nach Anspruch 1, bei dem die Temperatur im ersten Schritt zwischen 100 und 130°C liegt.

3. Verfahren nach Anspruch 1 oder 2, bei dem die Temperatur im zweiten Schritt zwischen 140 und 180°C liegt.

4. Verfahren nach einem der Ansprüche 1-3, bei dem man beide Schritte in einem Behälter durchführt.

5. Verfahren nach einem der Ansprüche 1-4, bei dem das Verfahren kontinuierlich ist und der Massenstrom des ersten Stroms, bezogen auf den Polyamidstrom im ersten Schritt, zwischen 2 und 6 kg/kg liegt.

6. Verfahren nach einem der Ansprüche 1-4, bei dem das Verfahren diskontinuierlich ist und der Massenstrom des ersten Stroms, bezogen auf den Polyamidstrom im ersten Schritt, zwischen 2 und 6 kg/kg.h liegt.

7. Verfahren nach einem der Ansprüche 1-6, bei dem es sich bei dem Polyamid um Polyamid-6 handelt.

**Revendications**

1. Procédé d'augmentation du poids moléculaire d'un polyamide, comprenant une première étape lors de laquelle le polyamide est mis en contact à contre-courant avec un premier courant qui comprend 15 à 100 % en poids d'$H_2O$ et 85 à 0 % en poids de $N_2$ à une température comprise entre 90 et 180 °C et pendant une durée comprise entre 5 et 10 heures, et une seconde étape lors de laquelle le polyamide obtenu lors de la première étape est mis en contact à contre-courant avec un second courant qui comprend 90 à 100 % en poids de $N_2$ et 10 à 0 % en poids d'$H_2O$, à une température comprise entre 130 et 200 °C et pendant une durée comprise entre 10 et 30 heures.

2. Procédé selon la revendication 1, dans lequel la température lors de la première étape est comprise entre 100 et 130 °C.

3. Procédé selon la revendication 1 ou 2, dans lequel la température lors de la seconde étape est comprise entre 140 et 180 °C.

4. Procédé selon l'une quelconque des revendications 1 à 3, dans lequel les deux étapes sont réalisées dans une cuve.

5. Procédé selon l'une quelconque des revendications 1 à 4, dans lequel le procédé est un procédé continu et le débit massique du premier courant par rapport au débit du polyamide lors de la première étape est compris entre 2 et 6 kg/kg.

6. Procédé selon l'une quelconque des revendications 1 à 4, dans lequel le procédé est un procédé discontinu et le débit massique du premier courant par rapport au débit du polyamide lors de la première étape est compris entre 2 et 6 kg/kg.h.

7. Procédé selon l'une quelconque des revendications 1 à 6, dans lequel le polyamide est le polyamide-6.

**EP 1 981 931 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4816557 A